# EUROPEAN PATENT SPECIFICATION

(11) **EP 2 751 720 B1**
(45) Date of publication and mention of the grant of the patent: **15.08.2018**
(21) Application number: 12781135.4
(22) Date of filing: 31.08.2012
(51) Int. Cl.: G06F 17/30

(54) **PROCESSING COMMUNICATIONS DATA**
VERARBEITUNG VON KOMMUNIKATIONSDATEN
TRAITEMENT DE DONNÉES DE COMMUNICATION

(30) Priority: 31.08.2011 GB 201115018
(43) Date of publication of application: 09.07.2014
(73) Proprietor: Metaswitch Networks Ltd, Enfield, Middlesex EN2 6BQ (GB)
(72) Inventor: LOUDON, Calum, Enfield Middlesex EN2 6BQ (GB); BELL, Michael, Edinburgh EH9 3DP (GB); DUNDAS, Alistair, Enfield Middlesex EN2 6BQ (GB); WHITE, Peter, Enfield Middlesex EN2 6BQ (GB)
(74) Representative: EIP
(86) International application number: PCT/GB2012/052145
(87) International publication number: WO 2013/030593

(56) References cited:
- US-A1- 2003 200 193
- US-A1- 2008 034 280
- Anonymous: "EML Enhancer Tool to Rename EML Files with a Detailed File Name", , 6 October 2010 (2010-10-06), pages 1-2, XP055051529, Retrieved from the Internet: URL:http://web.archive.org/web/20101006023 202/http://www.softspire.com/eml-enhancer. html [retrieved on 2013-01-29]

## Description

### Technical Field

The present invention relates to processing communications data for communications transmitted via a communications network.

### Background

A database may be stored using a number of schemes, including, for example, in a single file held on one storage device, or in a number of files that are either held on one device or partitioned across a number of storage devices. In each case, each file used to store all or part of a database includes a plurality of records belonging to the database.

The records in a file that stores all or part of a database may also be stored within that file according to a variety of schemes. A flat file structure may for example be used where one record is stored, as text, per line of the file. Other structures such as B+ trees, heaps and/or hash buckets may be used to store a number of records within a given file. Each of these data storage schemes offers tradeoffs in terms of several different aspects of the performance of the database storage system, including: ease with which new records may be inserted or removed, ease with which a given record may be located, storage efficiency, etc.

Some database applications may require the ability to store and then retrieve large numbers of small records for a large number of clients. Such a system may have to store many messages arriving at a high rate, while simultaneously searching for and returning in real time large numbers of records spread across the entire set of stored records.

As well as satisfying these performance constraints, such database applications may have to be reliable and economic. For example, it may be desired for such database systems to be resistant to losing data in the event of power failure, to be able to restart quickly in the event of failure, and to be relatively efficient in relation to hardware requirements in a practical implementation.

US-A1-2003/200193 describes a fast access system for data stored in a file system. According to US-A1-2003/200193, because there is typically far less overhead with the fast access system than a conventional file system, the fast access system provides a substantial boost in data access efficiency. File names themselves in the fast access system store data for later retrieval. As a result, the file system may retrieve metadata maintained in the file system, rather than opening the file itself, to obtain the data. Thus, the methods and systems accelerate retrieval of data by avoiding significant overhead that would be required for a conventional file system to open and read data from a file.

It would be desirable to provide improved methods for processing communications data.

### Summary

The invention is defined according to the claims.

### Brief Description of the Drawings

Figure 1 illustrates a database system, according to various embodiments.
Figure 2 illustrates a communications event processing system that incorporates the database system of Figure 1, according to various embodiments.
Figure 3 illustrates steps performed in order to store information relating to a relayed communications event as a communications event record in a database, according to various embodiments.
Figure 4 illustrates steps performed in order to access information relating to one or more communications event records stored in a database, according to various embodiments.
Figure 5 illustrates steps performed in order to transfer records in a database from a first storage type to a second storage type, according to various embodiments.
Figure 6 schematically illustrates components of a computing device, according to various embodiments.

### Detailed Description

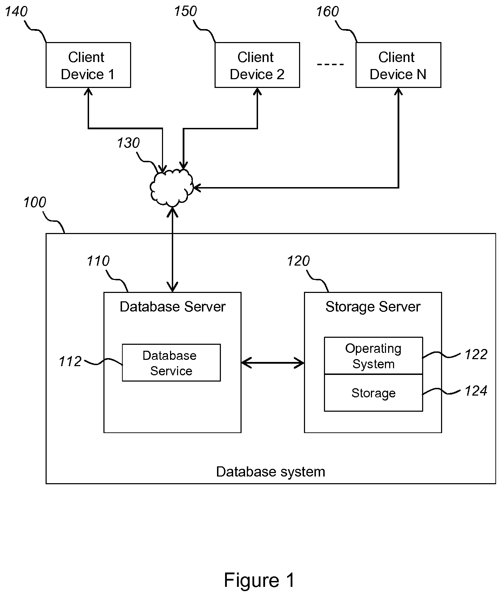

Figure 1 illustrates a database system 100, according to various examples. The database system 100 includes a database server 110 connected to a storage server 120. The database server 110 is connected to a communications network 130, for example the Internet. A plurality of client devices 140 - 160 of the database system 100 may communicate with the database server 110 via the communications network 130.

The database system 100 may provide a database that comprises a plurality of records. Each record may have one or more attributes.

The database may comprise a number of tables, where each table comprises a plurality of records. Each table may have a plurality of fields, and thus each attribute of a record corresponds to a value of the fields of the table to which that record belongs. Additionally each attribute of a record may correspond with a different field of the table to which the record belongs.

Each client device 140 - 160 may have a corresponding client program that uses the database system 100 to store, search, and access records of a database. In order to store, search and access the records of the database provided by the database system 100, the client programs of the client devices 140 - 160 may transmit database queries to the database server 110 of the database system 100 via the communications network 130.

In alternative examples described below, the client devices 140 - 160 may communicate with the database server via one or more intermediate servers (not shown) that, for example, provide a user interface to the client devices that enable users to access the database system 100. In this case the one or more intermediate servers may have client programs that store, search, and access records of a database provided by the database system 100 on behalf of the client devices 140 - 160, and transmit the results of these actions to the client devices 140 - 160.

The database server 110 includes a database service 112 that processes database queries received from the client devices 140 - 160. The database service 112 processes the database queries and communicates with a storage server 120 in order to store, access and search the records of the database provided by the database system 100.

The database records of the database are stored in non-volatile storage 124 on the storage server 120 of the database system 100. An operating system 122 running on the storage server provides a file system to organise data stored in the non-volatile storage 124 of the storage server 120. The file system provided by the operating system 122 allows the storage of files within a hierarchy of directories. Each file may include a file name that can be used to identify the file, and may include file content i.e. the data contained within the file. Each directory may include a directory name that can be used to identify the directory, and may also include other files and/or other directories.

Information about the structure of the file system, i.e. file and directory names, the hierarchy of directories and the files they contain, may be stored separately from the file content of files, e.g. in a form of index. The use of this index allows the operating system 124 to provide fast access to the content of files that are identified to the operating system 124 by their file name and the path to directory that contains them.

Thus, in response to database queries received from the clients 140 - 160, the database service 112 transmits file system instructions to the operating system 124 of the storage server 120 in order to access the records of the database. These file system instructions may relate to file system actions relating to file and directory creation, modification and deletion, and file searching, reading and writing. The file system instructions may be communicated to the operating system 122 of the storage server 120 using a network file system protocol such as Network File System (NFS) or Server Message Block (SMB).

In response to receipt of file system instructions from the database service 112, the operating system 122 of the storage server 120 may perform the corresponding file system actions listed above, and may transmit any results of the file system actions such as file content that is read or the results of file searches to the database service 112.

The database service 112 may then respond to the database query made by the client 140 - 160 by transmitting a response to the database query back to the client 140 - 160. If, for example, the database query included a request to read one or more records or to search for one or more records, the database service 112 may respond to the database query by transmitting back the records that are read or by transmitting back the search results, once these are received from the operating system of the storage server 120.

In various examples, the database service 112 stores individual records of the database within separate files in the file system provided by the operating system 122.

In particular, each record may be stored in the file name of a file in the file system provided by the operating system 122. The attributes of a record may be included in the file name along with other information relating to the record, as described in greater detail in the embodiments below.

A first illustrative example will now be described. In the first illustrative example the database system 100 is used within a system processing alphanumeric character strings relating to communications data for communications transmitted via a communications network. Access to this communications network may in this embodiment be provided by a service provider. The communications transmitted via a communications network are referred to as communications events below.

In this example the communications events transmitted via a communications network may for example be text messages and/or telephone calls made to or from telephony devices. The service provider may be a network operator that allows users of telephony devices to send and receive text messages and place and receive telephone calls (to/from other users of the service provider and/or users of other network providers).

This example allows a user of the service provider to access information relating to communication events involving a first device from different devices to the first device, where the first device is the one that the user normally uses for communications events such as text messages and/or telephone calls.

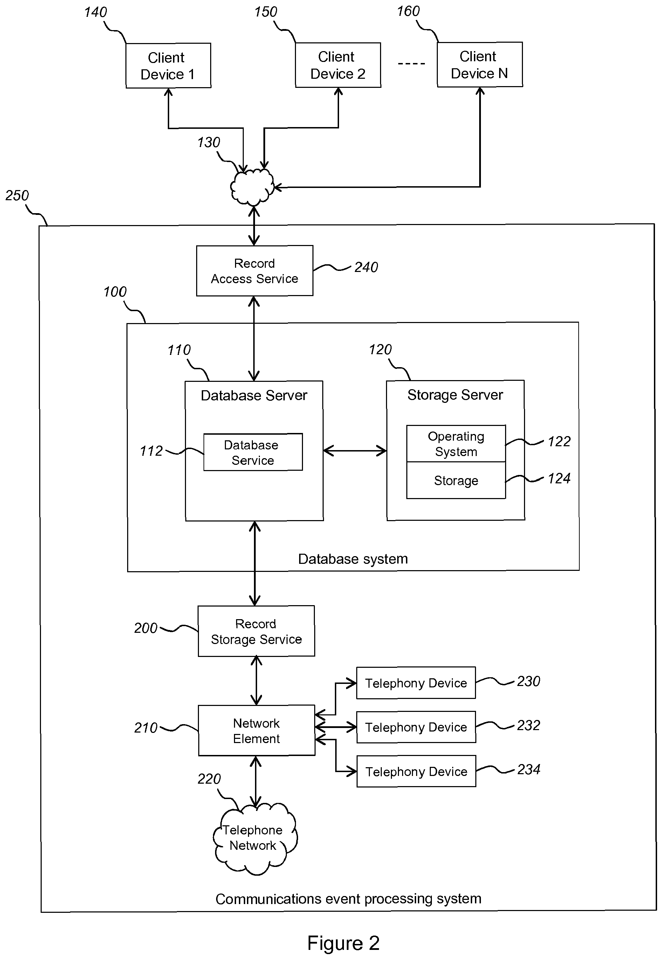

Figure 2 illustrates the database system 100 of Figure 1 within a communications event processing system 250. The communications event processing system 250 includes a record storage service 200 which is connected to the database server 110 and to a network element 210 (e.g. via a communications network).

The network element 210 may relay communications events such as text messages and telephone calls made between telephony devices 230 - 234 within the service provider's network and other telephony devices (not shown) in one or more foreign telephone networks 220. The text messages may for example include short messaging services (SMS) messages and multimedia messaging services (MMS) messages.

From the network element 210, the record storage service 200 may receive information relating to communications events relayed by the network element 210. The record storage service 200 may use the database service 112 of the database server 110 to store records containing information it receives from the network element. In this way the record storage service 200 stores information relating to a plurality of communications events as a plurality of records in the database provided by the database system 100. Records relating to a communications event will be referred to as communication event records below.

Once communications events records have been stored in the database provided by the database system 100, they may be accessed by users, e.g. from different devices to the ones which were involved in the communications. This involves devices communicating with a record access service 240, which in turn communicates with the database service 112 in order to access the stored communications records, as will later be described in detail.

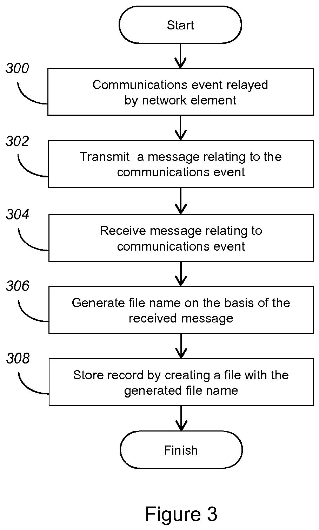

First, the storage of information relating to a relayed communications event as a communications event record in the database provided by the database system 100 will be described, with reference to the steps of Figure 3.

Initially, a communications event is relayed by the network element 210 (step 300). As summarised above the network element 210 may relay a communications event that is a text message or a telephone call between one of the telephony devices 230 - 234 of the service provider's network and another device. The communications event is thus relayed on behalf of the user of one of the telephony devices 230 - 234 of the service provider's network.

In response to the relaying of the communications event, information relating to the communications event is transmitted by the network element 210 to the record storage service 200. This information may be indicative of a number of characteristics of the communications event, and may include an identifier of the user on behalf of which the communications event was relayed.

In response to the network element 210 relaying a text message, the network element 210 may for example transmit information relating to the text message to the record storage service 200 that includes information such as: the message content, date and time transmitted, sender's telephone number, recipient's telephone number and/or identifier of the user on behalf of which the telephone call was relayed, etc. Media attached to an MMS message may also be transmitted to the record storage service 200.

In response to the network element 210 relaying a telephone call, the network element 210 may for example transmit information relating to the telephone call to the record storage service 200 that includes information such as: the date and time of the call, duration of the call, caller's telephone number, recipient's telephone number and/or identifier of the user on behalf of which the telephone call was relayed, etc.

In response to the receipt of information relating to a communications event, the record storage service 200 transmits a message relating to the communications event to the database service 112 (step 302). This is done in order to initiate storage of information relating to the communications event in the database provided by the database system 100.

The message transmitted to the database service 112 may include values indicative of the plurality of attributes of the record that is to be stored in the database.

The message transmitted to the database service 112 may be an alphanumeric character string. It should be appreciated that the term alphanumeric is used to refer to a character set including letters, numbers and special characters, for example punctuation characters.

Where the communications event is a text message, the message transmitted by the record storage service 200 may for example include values indicative of the following attributes of the record to be stored in the database: the message content, date and time transmitted, sender's telephone number, recipient's telephone number and/or identifier of the user on behalf of which the telephone call was relayed etc.

Where the communications event is a telephone call, the message transmitted by the record storage service 200 may for example include values indicative of the following attributes of the record to be stored in the database: the date and time of the call, duration of the call, caller's telephone number, recipient's telephone number and/or identifier of the user on behalf of which the telephone call was relayed etc.

In this example the message may include a database query that instructs the database service 112 to create a new communications event record in the database.

For example, the database query in the transmitted message may be a Structured Query Language (SQL) INSERT command that includes information relating to each attribute of the record to be created in the database for the communications event. For example, the SQL INSERT command "INSERT INTO text_messages VALUES ('Hi, heading home now', '123456789', '987654321', 12:11 18/8/2011, 121212AA);" instructs the database service 112 to create a new record in the text messages table containing the text message 'Hi, heading home now', which was sent to '123456789' from '987654321' at the time of 12:11 on 18/8/2011 on behalf of the user identified by the identifier 121212AA.

The database service 112 then receives the message transmitted by the record storage service 200 (step 304). As described above this message may be an alphanumeric character string, and may relate to a communications event that is to be stored as a record in the database of the database system 100.

In this example the database service 112 stores individual records of the database within separate files in the file system provided by the operating system 122.

Thus, in response to receiving the message transmitted by the record storage service 200, the database service 112 generates a file name on the basis of the message (step 306). This file name is used as the file name for a new file created by the database service 112, in order to store a communications event record relating to the message received from the record storage service 200.

The database service 112 may generate the file name by sequentially encoding in the generated file name the values indicative of the plurality of attributes of the record that are received in the message from the record storage service 200. The plurality of attributes may include a unique identifier for the record that is generated by the database service 112.

For example, the attributes for a record may be encoded in a pre-defined order in the file name, and may be separated by a pre-defined character or character sequence.

For a record relating to a text message, for example, the filename format may be <message ID>.<text message>.<recipient telephone number>.<sender telephone number>.<time sent>.<user ID>. In this example attribute vales are separated by a full stop i.e. '.' character, and the attribute values are placed in the specified sequence.

All the records in a particular table of the database may use the same pre-defined order for attribute values in a file name. Information relating to the pre-defined order of attribute values and attribute types (e.g. text, number, date, etc) may be stored in a separate file by the database service 112 and/or may be preconfigured in the database service 112.

The operating system 122 that provides the file system within which the new file is to be stored may only permit files to have file names with certain characters in them. Typically these characters may include alphanumeric characters, as described above.

Therefore when generating a file name on the basis of a message relating to a communications event, the database system 112 may encode the values in the message that are indicative of each attribute in the record using only the characters which the operating system 122 permits in file names. A character that is not permitted by the operating system 122 in file names may for example be encoded by the database service 112 using an escape sequence, e.g. using a special character such as caret followed by one or more extra characters that encode the character that is not permitted.

Once a file name has been generated by the database service 112 on the basis of the received message relating to a communications event, a communications event record is stored by the database service 112 creating, in the file system provided by the operating system 122, a file with the generated file name (step 308).

The database service 112 may create the file in the file system provided by the operating system 122 by transmitting file system commands to the operating system 122. For example, the database service 112 may transmit network file system (NFS) commands to the operating system 122 of the storage server 120 via a communications network. These NFS commands may include commands to create a file in the file system provided by the operating system 122, with a file name specified by the database service 112.

The database service 112 may instruct that the file that is created for the communications event record be created within a directory associated with the user to which that communications event relates. This user may be the one indicated in the user identifier attribute value included in the message received by the database service 112 from the record storage service 200.

Therefore, on the basis of the user identifier attribute value included in the message received by the database service 112, the database service 112 may determine a directory of the file system provided by the operating system 122 within which the file should be created. A pre-defined method may be used for associating directories of the file system with users of the service provider.

For example, directories of the file system that are associated with users may all be stored within a pre-configured user storage directory, such as /usr/db/users/. Each directory within this pre-configured directory may be associated with a user, and a directory may be given a directory name that includes the user identifier of the user to which that directory corresponds.

The database service 112 may thus determine the directory within which the file should be created by appending the user identifier of the user (which is included in the message by the database service 112) to the path of the pre-configured user storage directory, e.g. /usr/db/users/121212AB/.

Thus, when the database service 112 creates the file in the file system provided by the operating system 122 by transmitting file system commands to the operating system 122, it may include the determined directory in which the file is to be created in the transmitted file system commands. The file system commands may for example indicate that the file with the path "/usr/db/users/121212AB/<message ID>.<text message>.<recipient telephone number>.<sender telephone number>.<time sent>.<user ID>" is to be created, where <attribute name> indicates a value of the given attribute name. The file system commands may indicate that the file that is to be created has file content that is empty, i.e. it is a zero length file (n.b. as all information relating to the record is stored in the file name in this embodiment).

In this way a plurality of records relating to communications events are stored in the database of the database system 100 on behalf of a user by creating a plurality of files in a file system (provided by the operating system 122), where each file relates to a communications event record and where each of the files are stored within a directory associated with the user.

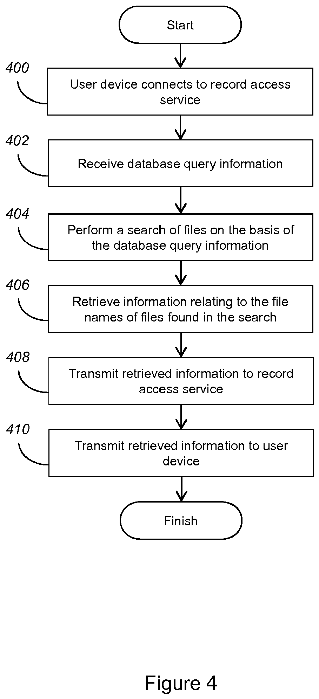

As summarised above communications event records stored in the database provided by the database system 100 may be accessed by users, e.g. from different devices to the ones which were involved in the communications events. This involves devices communicating with a record access service 240, which in turn communicates with the database service 112 in order to access the stored communications records, as will now be described with reference to Figure 4.

Initially a client device e.g. 140 connects to the record access service 240 (step 400).

The record access service 240 may for example provide a user interface to the client device 140 via which communications event records may be accessed. This user interface may be in the form of one or more web pages that are provided to the client device 140 by the record access service 140, which may for example include a web server (e.g. for providing web pages via HTTP). The user interface may require the user of the user device 140 to authenticate himself to the record access service 240, for example by the user providing a username and password, before access is granted to the user.

The username and password provided by the user may be those for an account that the user holds with the service provider of the communications event processing system 250. This account may relate to a telephony device, e.g. telephony device 230, that the user uses on the network provided by the service provider.

Once the user device has connected to the record access service 240, the record service 240 may retrieve information in relation to communications events records held on behalf of the user in the database provided by the database system 100. The record access service 240 may do this so that the retrieved information can be displayed to the user of the user device 140, e.g. via the user interface provided by the record access service 240.

In order to begin retrieving information relating to communications events records held on behalf of the user that has connected to the record access service 140, the record access service may transmit to the database service 112 database query information. As a result, the database service 112 receives database query information from the record access service (step 402). The database query information may include the user identifier of the user that has connected to the record access service 240.

The database query information may for example include an SQL SELECT statement that requests for information relating to one or more communications event records to be transmitted to the record access service 240. An example of a SQL SELECT statement could be: "SELECT * from text messages WHERE user_id = '121212AB"'. This SQL SELECT statement would indicate to the database service 112 that all communications events records in the text messages table relating to the user with ID 121212AB should be transmitted to the record access service 240.

In response to receiving the database query information, the database service 112 conducts a search of files in the file system provided by the operating system 122 on the basis of said database query information (step 404).

This search for files may be conducted by the database service 112 determining file search criteria from the database query information, and then performing a search for files using the determined file search criteria. For example, as the records relating to the user with ID 121212AB are stored in a directory associated with that user, the database service 112 may determine that the file search criteria should specify that all files in the directory associated with the user should be searched.

In this example, in order to return all communications event records relating to the user with ID 121212AB, the database service 112 may determine file search criteria that selects all the files in the directory associated with the user, e.g. by using the file search criteria "/usr/db/users/121212AB/*", where "/usr/db/users/121212AB/" represents the path of the directory associated with the user, and where "*" represents a wildcard character.

Once file search criteria have been determined by the database service 112, the database service 112 may transmit to the operating system 122 file system commands in order to perform the above search for files. For example, the database service 112 may transmit to the operating system 122 network file system (NFS) commands instructing a search for files on the basis of the determined search criteria.

The operating system 122 then returns the results of the search for files to the database service 112. As a result the database service 112 retrieves information relating to the file names of one or more files that were found in the search for files (step 406).

Each of the files that is found in the search for files corresponds with a previously stored record of the database (e.g. stored following instructions from the record storage service 200). As was described above, information relating to a communications event is stored in a record of the database by creating a file with a file name that contains information relating to the communications event.

As a result, each file name that is returned by the search for files contains all the information relating to the record to which that file corresponds. Thus by retrieving the information relating to one or more file names that were found in the search for files, the database service 112 retrieves information relating to one or more communications events stored as records in the database.

The database service 112 then transmits to the record access service 240 the retrieved information relating to one or more communications events records (step 408). The database service 112 may decode the information stored in the file names, e.g. if the information was encoded due to the restricted set of characters that the operating system 122 permits for use in file names. For example characters encoded using escape sequences may be decoded.

The database service 112 may also format the retrieved information in a standard format before transmission. For example, the information relating to the retrieved records may be formatted according to a format associated with responses to SQL queries.

The record access service 240 then receives the information relating to the retrieved records from the database service 112 and transmits it to the user device 140 (step 410).

The record access service 240 may process the received information, e.g. in order to prepare it for display to the user via a user interface. For example the record access service 240 may create one or more dynamic web pages that include information relating to the retrieved communications event records. These dynamic web pages may then be transmitted to the user device 140 for display to the user. The web pages may for example show a list of recent communications events involving the telephony device 230 that is associated with the user's account with the service provider. This list may include communications events that have not been received by the telephony device 230, e.g. missed telephone calls or text messages that have not been received by the telephony device due to it being switched off.

Thus, as described above, this example allows a user of a service provider to access communications event records from different devices to the device that he/she normally uses to send/receive communications events e.g. to send/receive text messages and/or place/receive telephone calls.

Thus the first illustrative example provides a database system where information relating to a plurality of communications events is stored, on behalf of a user, as a plurality of records in a database. This is done by creating a plurality of files in a file system, where each record relates to a communications event relating to the user, where each created file relates to one of the records of the user, is stored within a directory of the file system associated with the user.

Additionally, storing information relating to a given communications event as a record in the database system on behalf of a given user comprises receiving an alphanumeric character string relating to a communications event to be stored as a record in the database on behalf of the user; generating a file name on the basis of the message where the file name includes alphanumeric information contained in the message which relates to the communications event, and storing the record by creating a file within a directory associated with the given user, where the created file has the generated file name.

There are a number of effects of storing records individually in the file names of files of a file system in the manner described in this embodiment.

First of all, storage overhead is reduced in comparison to storing information relating to each record in the file content of a separate file. Storing information relating each record in file content of a separate file would require at least one file system block to store the information in each file, where each file system block generally has a fixed size, e.g. 4Kbytes. In contrast the information in one communications record may be relatively small, e.g. for a text message it includes only information relating to the message content, e.g. 160 characters long, and other fields such as sender and recipient telephone numbers, date and time of message etc. Thus a communications event record relating to a text message is likely to contain less than 1Kbyte of information, so storing it separately in a file system block could lead to a significant portion of the file system block being wasted.

By instead storing communications event records in separate file names, the file system of the operating system 122 stores each file name (and thus each record) within the indexing structures of the file system, such that, typically, more than one record is stored per file system block.

Additionally, creating a file that has file content typically requires at least four write operations by the operating system 122 to a non-volatile storage device. For example, in Unix-style file systems such as the third extended file system (ext3) or the Unix File System (UFS), creating a file that has file content requires the following write operations: one to reserve an inode (which stores metadata relating to a file) for the file, another to write the reserved inode, another to write the file content, and another one to update the directory entry to reference the file.

By storing all the information relating to a record in a file name, and having file content that is empty, the number of write operations that the operating system 122 needs to perform can be reduced. For example, in Unix-style file systems such as UFS the following write operations are required: the two writes mentioned above for reserving and writing an inode, and the one mentioned above for updating the directory entry. Additionally, reservations of inodes that are made in close succession are likely to be combined into one write operation by the operating system 122, so in practice the number of write operations for storing, in close succession, a plurality of records (e.g. on behalf of a plurality of users of the service provider) in separate file names reduces to just over two write operations per record. The database system 100 thus provides efficient per-record storage.

Additionally record access is efficient in the database system 100 as the file structure of the file system provided by the operating system 122 is used to assist in storing records such that they may be quickly accessed according to their attributes. A file system that is able to quickly recover following a crash or power failure without data loss (or with minimal data loss) may also be used in order to ensure the database system 100 is robust in the event of such failures.

Finally, as shown in the steps of Figure 4 above, a single search for files in a directory associated with a user is sufficient to return the attribute values of a plurality of records associated with the user, as these attribute values are stored in the file names of files in that directory, and the search for files returns all of these file names.

In an alternative arrangement to the first illustrative example the database query information received by the database service 112 in step 402 can indicate that only communications event records satisfying given conditions should be returned to the record access service 240, e.g. by specifying conditions for each record to satisfy for it to be returned. For example, the database query information could specify that only communications events records from the caller/sender with telephone number 222333 should be returned.

In this case, the database service 112 can still perform a single search for files using the operating system 122 in step 404 in order to return all of the records that satisfy the conditions given in the database query information. As described above the search for files may be conducted by the database service 112 determining file search criteria from the database query information, and then performing a search for files using the determined file search criteria. In this alternative arrangement, the database service 112 may determine that the file search criteria should include a regular expression and/or one or more wildcard characters.

In this example, in order to return all communications event records relating to the user with ID 121212AB that were called from or sent by the device with telephone number 222333, the database service 112 may use file search criteria "/usr/db/users/121212AB/*222333*", where "/usr/db/users/121212AB/" represents the path of the directory associated with the user, and where "*222333*" indicates that file names containing the string "222333" should be returned.

Alternatively, in order to return all communications event records relating to the user with ID 121212AB that were called from or sent by the device with telephone number 222333, the database service 112 may perform a file search that returns all files in the directory associated with the user, e.g. by searching for "/usr/db/users/121212AB/*", where "/usr/db/users/121212AB/" represents the path of the directory associated with the user, and where "*" indicates that all files should be returned. The database service 112 may then process each of the returned file names in order to determine whether each file corresponds to a record that satisfies the given conditions.

In an alternative to this arrangement, the database service 112 may store field attribute identifiers along with each attribute value in the file name of each file. For example, the caller telephone number attribute identifier and value may be included in the file name of a record as "<caller>043219</caller>" i.e. using XML syntax, or using any other scheme in order to link an attribute value to its corresponding attribute identifier. By including attribute identifiers in the file name the database service 112 may more easily perform searches for records based on values for specific attributes, e.g. file search criteria "/usr/db/users/121212AB/*<caller>043219</caller>*" would return all records relating to the user with ID 121212AB where the caller telephone number was 043219.

A second illustrative example will now be described. The second illustrative example may proceed according to the first illustrative example, but in addition at least some of the communications event records relating to a given user may be archived into an archive file.

Thus in the second illustrative example, the database provided by the database system 100 comprises storing a first plurality of records of the database in a first storage type and a second plurality of records in a second storage type.

In the first storage type each record of the first plurality of records is stored in one or more files in the file system provided by the operating system 122, where each of these files relates to one record of the plurality of records. Thus the first storage type corresponds to the record storage method of the first illustrative embodiment.

In the second storage type each of one or more subsets of records of the second plurality of records is stored in the file content of a separate file in the file system provided by the operating system 122, where each of the subsets comprises a plurality of records. Thus the second storage type corresponds to a plurality of archive files, where each archive file stores a plurality of records of the database.

The database service 112 may have an archiving procedure that moves a number of records from the first storage type, i.e. in separate file names, to the second storage type, i.e. an archive file, in response to a trigger within the database system 100.

In this example, the archiving procedure may be triggered in response to a threshold of the number of records stored in the first storage type being exceeded.

This threshold could be applied on a per-user basis, e.g. if there are 100 records in the first storage type that are stored on behalf of user A, then the archiving procedure may be triggered so that at least some of those records are archived. Thus in this embodiment the records stored in a given archive file may all be stored on behalf of the same user.

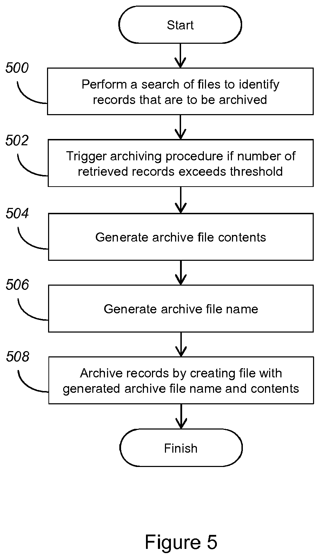

In order to transfer records from the first storage type to the second storage type the database service 112 proceeds as is now described, with reference to Figure 5.

Initially a search of files in the file system provided by the operating system 122 is performed by the database service 112 in order to identify the records stored in the first storage type that are to be archive (step 500). This search of files may be one that is conducted in the course of retrieving database records to be transmitted to the user, e.g. it may be a search of files stored in a directory associated with a given user as described in step 406 above.

As described in previous examples, a search of files in the first storage type (i.e. where each record is stored in the file name of a separate file) returns one or more file names that each contain information relating to a different record of the database.

If the database service detects that the number of records returned from the search is above a threshold, the archiving procedure may be triggered (step 502). As stated above the threshold could be applied on a per-user basis, e.g. if a search for records stored on behalf of a given user in the first storage type is performed and the retrieved number of records exceeds the threshold then the archiving procedure may be triggered.

The database service 112 then generates, on the basis of the retrieved file names, archive file contents (step 504). The generated archive file contents includes information relating to the records to which the retrieved file names correspond. For example, if twenty file names are retrieved that each relate to a different record, information relating to each record is taken from each file name and used to generate file contents that includes information relating to each of those records. Any known method of storing a plurality of records in file contents may be used to store the plurality of records in the archive file contents, e.g. a flat file structure, B+ trees, heaps, hash buckets, etc.

Additionally the database service 112 generates, on the basis of the retrieved file names, an archive file name (step 506). In order to generate the archive file name the database service 112 generates aggregate information relating to the records stored in the generated archive contents. This aggregate information may be included in the archive file name.

The aggregate information may include information that can be used to identify the records in the archive file. For example, the aggregate information may include an indicator of the range of the values of one of the attributes of the records stored in the generated archive contents, e.g. if the records were all related to text messages sent between the dates of 1/2/2011 and 1/4/2011 then this range of sent dates may be included in the aggregate information as the string "<sent><start>1/2/2011<start><end>1/4/2011</end></sent>". Note that in this example attribute identifiers have been included in the string, but this need not be the case. The aggregate information could include a plurality of such indicators of the range of the values, i.e. where each such indicator relates to a different attribute of the records stored in the generated archive content. Where all of the records have the same value for a particular attribute, an indicator of the range of values for that attribute may not be needed, and the value itself may be used in the generated file name.

The database service 112 then archives the records to which the retrieved file names correspond by creating an archive file having the generated archive file name and comprising the generated archive file contents (step 508). The database service 112 may create the archive file by transmitting file system commands to the operating system 122, as in the first illustrative embodiment.

As stated above in this example the records stored in a given archive file are all stored on behalf of the same user. As a result the database service 112 may instruct that the archive file that is created in step 508 be created within a directory associated with the user to which the records in that archive file relate, where the directory is determined as in the first illustrative embodiment.

Once the archive file has been created, the files in the first storage type that store the records that have been archived may be deleted.

In the second illustrative example, records are read from the database provided by the database system 100 using a different procedure to the one of the first illustrative example (i.e. illustrated in Figure 4), in order to account for the records stored in archive files. This procedure will now be described with reference to Figure 4.

Initially a client device e.g. 140 connects to the record access service 240, as in the first illustrative embodiment (step 400).

In order to begin retrieving information relating to communications events records held on behalf of the user that has connected to the record access service 140, the record access service may transmit to the database service 112 database query information. Thus the database service 112 receives database query information from the record access service, as in the first illustrative embodiment (step 402).

In response to receiving the database query information, the database service 112 conducts a search of files in the file system provided by the operating system 122 on the basis of said database query information, as in the first illustrative embodiment (step 404). This search for files may be conducted by the database service 112 determining file search criteria from the database query information, and then performing a search for files using the determined file search criteria, as in the first illustrative embodiment.

The operating system 122 then returns the results of the search for files to the database service 112. As a result the database service retrieves information relating to the file names of one or more files that were found in the search for files (step 406).

In this example the retrieved file names may include the file names of one more files representing records that are held in at least one of the first storage type and the second storage type, i.e. the search might return records in the first storage type, in the second storage type, on in both the first and second storage types.

For records that are held in the first storage type, the database service 112 retrieves information relating to the records from the file names returned by the search for files, as in the first illustrative example. For records that are held in the second storage type, the database service 112 retrieves information relating to the records by reading the archive files indicated by the file names of files in the second storage type returned in the search for files.

For example, for each archive file whose file name is returned by the search for files, the database service 112 may transmit to the operating system 122 network file system (NFS) commands instructing that the file contents of that archive file are read. The results of the read are then transmitted to the database service 112. The database service thus receives the file contents of each archive file and thus retrieves information relating to each of the records stored in each of the archive files identified by the search for files.

The database service 112 may process each record that is received from each of the archive files, in order to determine whether the attribute values of the record satisfy the database query information received by the database service 112 in step 402. If any of the records do not satisfy the database query information they may be removed from the retrieved search results and may not be transmitted to the record access 240.

The database service 112 then transmits to the record access service 240 the retrieved information relating to records in the database that are returned by the search for files, as in the first illustrative example (step 408). The record access service 240 then receives the information relating to the retrieved records from the database service 112 and transmits it to the user device 140, as in the first illustrative embodiment (step 410).

Using the first storage type and second storage type to store records of the database provided by the database system 100 in the manner described provides various effects as follows:
For records that are stored in the second storage type (i.e. archive files) there is no issue regarding storage overhead arising from system block sizes as the size of data being stored in the archive file is sufficiently large that storage overhead is of no concern.

Additionally searching of the archive files is efficient, as the archive files have file names that contain aggregate information relating to the attributes of the records that they store. As described above, an indicator of the range of values of an attribute may be included in an archive file name. File search criteria can thus be constructed so that an archive file can be included (or omitted) in file search results on the basis of the aggregate information in the archive's file name.

Finally records in the second storage type could be held on different storage media to records in the first storage type. For example, as the records in the second storage type are accessed less frequently they can be stored on cheaper, slower and/or higher density devices than the records in the first storage type.

In an alternative to the second illustrative example the archiving procedure may be triggered in response to a threshold of the access frequency or last access date being exceeded for a group of one or more records. This threshold could be applied on a per user basis, e.g. if there is a group of 10 records that have been accessed less than 5 times, that have not been accesses for more than 2 months, and/or were created more than 3 months ago, then the archiving procedure may be triggered so that at least some of those records are archived.

When storing a record in a file name of a file in the first storage type (e.g. according to steps 306 and 308 described above), the database service 112 may include in the file name metadata relating to the file, such as the date and time when the record was created, when the record was last accessed, the number of times it has been accessed, etc. This metadata may be updated by the database service 112 when the file is accessed. This metadata may be used by the database service 112 when determining whether to trigger the archiving procedure.

In another alternative to the second illustrative example, each archive file (i.e. containing records stored in the second storage type) may be created, e.g. in response to the triggering of a first archiving procedure, such that it initially contains one or more records, and is then gradually filled, e.g. each time one or more subsequent archiving procedures are triggered, until the archive file contains a maximum allowed number of records. Each time a record is added to an archive file the file name of the archive file may be changed, e.g. in order to include attributes of the specific record added, or aggregate attributes regarding all of the records that are included in the archive after the new record has been added.

In another alternative to the second illustrative example, the aggregate information included in an archive file name by the database service 112 may include hashed information generated by the database service 112 from the attribute values of the records stored within the file contents of the archive file. For example, the aggregate information may include hashed information generated from one of the attributes of each of the plurality of records.

The hashed information may be generated by applying a Bloom hash to the attribute values of the stored records, for example a Bloom hash may be applied to all the attribute values of the sender telephone number attribute of the stored records, or it could be applied to the values of two or more attributes of the stored records. Bloom hashing is a known technique that includes hashing multiple values and combining them with bitwise OR operations into a single bitmap.

The Bloom hash may be used during searches for files (e.g. to provide responses to database queries) to provide "no" or "maybe" answers to database queries on the attribute values of the records in the archive file, i.e. it can either indicate that the archive file definitely does not contain records matching the search criteria, or that it might contain records containing the search criteria, typically with a low probability of providing a false positive (i.e. a "maybe" when the archive does not contain records matching the search criteria). Including hashed information such as a Bloom hash in this way allows for more efficient searching of records stored in archive files.

A third example of the invention will now be described. In the third example, when storing a given record according to the steps of Figure 3 by creating a file with a generated file name, the database service 112 may generate a search key from at least two of the attributes of the record, and include this search key in the file name of the created file.

The search key may be generated by processing the attribute values of at least two of the attributes of the record that is stored. These attribute values may, for example, have been received in the message relating to a communications event received by the database service 112 in step 304, as described above.

The search key may be generated by applying a hash function to the two or more attribute values to which the search key relates. For example, the hash function could be applied to all the telephone numbers indicated by the sender and recipient(s) attributes of a text message. These telephone numbers may be ordered according to a predefined algorithm, e.g. in increasing order, and the hash function may then be applied to the grouped and ordered values. In this way if a plurality of text messages all have the same telephone numbers in their sender and recipient(s) attributes (e.g. as they all relate to a conversation between two or more parties) then the hash function may generate the same search key for all of these text messages.

The database service 112 can thus search for records on the basis of the search keys in the file names of the records. If, for example, the database service 112 receives database query information that relates to at least two attributes of a first plurality of records, e.g. sender and recipient telephone numbers of records relating to text messages, then, if a search key has been stored for those at least two attributes, the database service 112 can perform a file search on the basis of a search key identifier determined from the values of the at least two attributes that are contained in the database query information.

The search key identifier may be generated in the same way as a search key is generated, i.e. by applying a hash function to the two or more attribute values that are given in the database query information. The search key identifier may then be included in file search criteria used by the database service 112 when performing a search for files on the basis of the database query information (e.g. in step 404 of Figure 4). File names that contain the search key identifier, i.e. that satisfy the database query, may then be returned in the results of the file search. For example, if the search key identifier "a234" is generated by applying the hash function, the database service 112 may perform a search for files using the file search criteria "/usr/db/users/121212AB/*<search key>a234</search key>*"

By including search keys in the file names of records, this example can render searches for files performed by the operating system 122, and thus searches for records stored by the database system 100, more efficient. For example, rather than needing to test whether the file name of a file corresponding to a record includes the telephone numbers of each of a number of parties, the operating system 122 can be instructed to test whether the file name includes a (shorter, in terms of number of characters) search key identifier instead. If this is done for a plurality of files when a search for files is performed then the search for files may be more efficiently performed.

In accordance with first examples, a method for processing communications data for communications transmitted via a communications network is provided. The communications data is processed on behalf of a user of the communications network. Communications data for communications is stored as a plurality of records in a database by creating a plurality of files in a file system. Each of the plurality of files is stored within a directory of the file system and each file has a file name when stored within the directory. Communications data including an alphanumeric character string to be stored as a record in the database on behalf of the user is received. A file name including data indicative of at least part of the alphanumeric character string is generated. The record is stored by creating a file within a directory of the file system, the file having the generated file name.

The communications data for communications transmitted via a communications network may for example relate to a communications event. In some embodiments, the communications data relates to one or more of a short messaging services (SMS) message, multimedia messaging services (MMS) message, a telephone call record, an instant message, a social network post and a microblog entry.

By storing records individually in the file names of files of a file system, storage overhead is reduced in comparison to storing information relating to each record in the file content of a separate file. Storing information relating to each record in file content of a separate file would require at least one file system block to store the information in each file. In contrast the information in communications data for communications transmitted via a communications network, i.e. relating to a communications event, may be relatively small. Thus storing a communications event record separately in a file system block could lead to a significant portion of the file system block being wasted. By instead storing communications event records in separate file names, the file system stores each file name (and thus each record) within indexing structures of the file system, such that, typically, more than one record is stored per file system block.

Record access is efficient as the file structure of the file system is used to assist in storing records such that they may be quickly accessed according to their attributes. A file system that is able to quickly recover following a crash or power failure without data loss (or with minimal data loss) may also be used in order to ensure the database is robust in the event of such failures.

Additionally, the file that is created to store the record may be created such that the file content of the file is empty, i.e. all information relating to the record is stored in the file name only. Creating a file that has file content typically requires more write operations by the operating system that provides the file system. By storing all the information relating to a record in a file name, and having file content that is empty, the number of write operations performed by the operating system can be reduced.

In some examples a database query may be executed in order to retrieve communications data relating to one or more communications events by receiving database query information, performing a search of files in the file system on the basis of the database query information, the search returning the file names of one or more files, retrieving communications data relating to one or more communications events stored as records in the database from the file names of the one or more files, and transmitting the retrieved information in response to the receipt of the database query information.

Additionally in some examples the database query is conducted on behalf of a given user by receiving the database query information from the user, and performing the search of files in the file system such that the searched files are those within a directory of the file system associated with the user.

Thus a single search for files in a directory associated with a user is sufficient to return communications data relating to one or more communications events stored as records associated with the user, as these records are stored in the file names of files in that directory, and the search for files returns all of these file names.

In some examples the communications data for communications transmitted via a communications network relate to communications involving a first device of the user, and the above database query information is received from a second device different to the first device.

This allows a user that has a number of devices to access communications event records from different devices to the first device, which may be the one that he/she normally uses to send/receive communications events e.g. to send/receive text messages and/or place/receive telephone calls.

In some examples each record comprises a plurality of attributes and generating a file name for the file that is created to store a record comprises sequentially encoding values indicative of the plurality of attributes of the record in the file name.

Additionally generating a file name may comprise encoding the alphanumeric character string received in the communications data as a sequence of characters, where the sequence of characters only includes characters that are permitted in file names by the file system.

In some examples a plurality of records of the database may be archived by performing a search of files in the file system in order to retrieve a plurality of file names corresponding to a plurality of records, each of the file names corresponding to one of the records of the database and containing information relating to the record; generating, on the basis of the retrieved plurality of file names, archive file contents comprising information relating to the plurality of records and an archive file name identifying the plurality of records; and archiving the plurality of records by creating an archive file having the archive file name and comprising the archive file contents.

For records that are stored in archive files there is no issue regarding storage overhead arising from system block sizes as the size of data being stored in the archive file is sufficiently large that storage overhead is of no concern.

Additionally searching of the archive files is efficient, as the archive files may be given file names that contain aggregate information relating to the attributes of all the records that they store. For example, an indicator of the range of values of an attribute of all the records in the archive file may be included in an archive file name. File search criteria can thus be constructed so that an archive file can be included (or omitted) in file search results on the basis of the aggregate information in the archive's file name.

In accordance with second examples, a computer program product comprising a non-transitory computer-readable storage medium having computer readable instructions stored thereon is provided. The computer-readable instructions are executable by a computerized device to cause the computerized device to perform a method for processing communications data for communications transmitted via a communications network. The communications data is processed on behalf of a user of the communications network. The method for processing communications data comprises: storing communications data for communications as a plurality of records in a database by creating a plurality of files in a file system, wherein each of the plurality of files is stored within a directory of the file system and wherein each file has a file name when stored within the directory; receiving communications data including an alphanumeric character string to be stored as a record in the database on behalf of the user; generating a file name including data indicative of at least part of the alphanumeric character string; and storing the record by creating a file within a directory of the file system, the file having the generated file name.

In accordance with third examples, a method for storing a plurality of records of a database comprising a plurality of records is provided. Each record has a plurality of attributes and the records of the database are stored as a plurality of files in a file system. Each of the plurality of files is stored within a directory of the file system and each file has at least a file name when stored within the directory. A first plurality of records is stored as a first storage type wherein at least one attribute of each of the first plurality of records is stored in one or more file names of files stored in the file system. A second plurality of records of the database is stored as a second storage type wherein the at least one attribute of each of the second plurality of records is stored in the file content of files stored in the file system.

For records that are stored in the second storage type (i.e. archive files) there is no issue regarding storage overhead arising from system block sizes as the size of data being stored in the archive file is sufficiently large that storage overhead is of no concern.

Additionally searching of files in the second storage type (archive files) is efficient, as the archive files have file names that contain aggregate information relating to the attributes of the records that they store. For example, an indicator of the range of values of an attribute of all the records in the archive file may be included in an archive file name. File search criteria can thus be constructed so that an archive file can be included (or omitted) in file search results on the basis of the aggregate information in the archive's file name.

Finally records in the second storage type could be held on different storage media to records in the first storage type. For example, as the records in the second storage type are accessed less frequently they can be stored on cheaper, slower and/or higher density devices than the records in the first storage type.

In some examples, each file has file content when stored within the directory.

In some examples the above aggregate information includes hashed information generated from the plurality of records, and the hashed information can be processed in order to execute a database query on records held in the file storing the plurality of records.

The hashed information may be generated from the attribute values of the records stored within the file contents of the archive file. For example, the hashed information may be generated by applying a Bloom hash to the attribute values of the stored records.

The Bloom hash may be used during searches for files (e.g. to provide responses to database queries) to provide "no" or "maybe" answers to database queries on the attribute values of the records in the archive file. Including hashed information such as a Bloom hash in this way allows for more efficient searching of records stored in archive files.

In some examples a new record is stored in the database by receiving information relating to a new record to be stored in the database and storing the new record in the first storage type by creating a file in a file system.

Additionally creating a file in a file system may include generating a file name indicative of the received information, and storing the new record by creating a file in a file system, the file having the generated file name.

Thus records that are stored in the first storage type may benefit from the records being separately stored in the file names of individual files, as described above.

In some examples a plurality of records stored in the first storage type may be transferred to the second storage type in response to an archival trigger. This transfer could be triggered at least partly on the basis of a number of records stored in the first storage type. The transfer could additionally or alternatively be triggered at least partly on the basis of an indication of an access frequency relating to the transferred plurality of records.

In accordance with fourth examples, a computer program product comprising a non-transitory computer-readable storage medium having computer readable instructions stored thereon is provided. The computer-readable instructions are executable by a computerized device to cause the computerized device to perform a method for storing a plurality of records of a database comprising a plurality of records. Each record has a plurality of attributes and the records of the database are stored as a plurality of files in a file system. Each of the plurality of files is stored within a directory of the file system and each file has at least a file name when stored within the directory. The method for storing the plurality of records comprises storing a first plurality of records as a first storage type wherein at least one attribute of each of the first plurality of records is stored in one or more file names of files stored in the file system and storing a second plurality of records of the database as a second storage type wherein the at least one attribute of each of the second plurality of records is stored in the file content of files stored in the file system.

In some examples, each file has file content when stored within the directory.

In accordance with fifth examples, a method for storing a record belonging to a database is provided. The database comprises a plurality of records, each record having a plurality of attributes. A plurality of files in a file system are used to store the records of the database. Each file has a file name. The method comprises receiving information relating to a record to be stored in the database, the information including values indicative of the plurality of attributes of the record; generating a file name indicative of the information relating to the record, the generated file name including a search key generated by processing the indicated values of at least two attributes of the record; and storing the record by creating a file in a file system, the file having the generated file name.

The search key may for example be generated by applying a hash function to the two or more attribute values to which the search key relates.

By including search keys in the file names of records, searches for files in a file system, and thus searches for records stored in the database, can be made more efficient. For example, rather than needing to test whether the file name of a file corresponding to a record includes the telephone numbers of each of a number of parties, the file system can be instructed to test whether the file name includes a (shorter, in terms of number of characters) search key identifier instead. If this is done for a plurality of files when a search for files is performed then the search for files may be more efficiently performed.

Thus in some examples a database query may be executed by receiving database query information, performing a search of files in the file system on the basis of the database query information, the search returning the file names of one or more files, wherein each of the files relates to a record of the database, retrieving information relating to one or more records of the database from the file names of the one or more files, and transmitting the retrieved information in response to the receipt of the database query information.

Additionally where the database query relates to at least two attributes of a first plurality of records a database query may be executed by determining, from attribute information relating to at least two record attributes, a search key identifier, wherein the attribute information is included in the database query information. The file name of each searched file includes a search key generated by processing indicated values of at least two attributes of the record to which that file relates, and the search of files is performed on the basis of the determined search key identifier such that the search key of each file is compared to the determined search key identifier.

In accordance with sixth examples, a computer program product comprising a non-transitory computer-readable storage medium having computer readable instructions stored thereon is provided. The computer-readable instructions are executable by a computerized device to cause the computerized device to perform a method for storing a record belonging to a database. The database comprises a plurality of records, each record having a plurality of attributes. A plurality of files in a file system are used to store the records of the database. Each file has a file name. The method comprises receiving information relating to a record to be stored in the database, the information including values indicative of the plurality of attributes of the record; generating a file name indicative of the information relating to the record, the generated file name including a search key generated by processing the indicated values of at least two attributes of the record; and storing the record by creating a file in a file system, the file having the generated file name.

In accordance with seventh examples, apparatus is provided. The apparatus comprises at least one processor and at least one memory including computer program code. The at least one memory and the computer program code are configured to, with the at least one processor, cause the apparatus at least to perform a method for processing communications data for communications transmitted via a communications network, wherein said communications data is processed on behalf of a user of the communications network. The method comprises storing communications data for communications as a plurality of records in a database by creating a plurality of files in a file system, wherein each of said plurality of files is stored within a directory of said file system and wherein each file has a file name when stored within the directory; receiving communications data including an alphanumeric character string to be stored as a record in said database on behalf of the user; generating a file name including data indicative of at least part of said alphanumeric character string; and storing said record by creating a file within a directory of said file system, said file having said generated file name.

In accordance with eighth examples, apparatus is provided. The apparatus comprises at least one processor and at least one memory including computer program code. The at least one memory and the computer program code are configured to, with the at least one processor, cause the apparatus at least to perform a method for storing a plurality of records of a database comprising a plurality of records. Each record has a plurality of attributes and the records of the database are stored as a plurality of files in a file system. Each of the plurality of files is stored within a directory of the file system and each file has at least a file name when stored within the directory. The method comprises storing a first plurality of records as a first storage type wherein at least one attribute of each of the first plurality of records is stored in one or more file names of files stored in the file system, and storing a second plurality of records of the database as a second storage type wherein the at least one attribute of each of the second plurality of records is stored in the file content of files stored in the file system.

In accordance with ninth examples, an apparatus is provided. The apparatus comprises at least one processor and at least one memory including computer program code. The at least one memory and the computer program code are configured to, with the at least one processor, cause the apparatus at least to perform a method for storing a record belonging to a database. The database comprises a plurality of records, each record having a plurality of attributes. A plurality of files in a file system are used to store the records of the database. Each file has a file name. The method comprises receiving information relating to a record to be stored in the database, the information including values indicative of the plurality of attributes of the record; generating a file name indicative of the information relating to the record, the generated file name including a search key generated by processing the indicated values of at least two attributes of the record; and storing the record by creating a file in a file system, the file having the generated file name.

In an alternative to the second illustrative example, the aggregate information included in an archive file name by the database service 112 may include hashed information generated from a plurality of the attributes of at least one of the plurality of records that the archive file contains. An example of such information includes a search key generated from the attributes of one record in accordance with the steps of the third example described above.

In a further alternative to the second illustrative example, the aggregate information included in an archive file name by the database service 112 may include a hash of a plurality of search keys of the records that the archive file contains. Each of these search keys may be generated from the attributes of one of the records that the archive file contains, where each search key is generated in accordance with the steps of the third embodiment described above.

Thus in some cases, a search key stored in the file name of a record stored in the first storage type may be copied into the file name of an archive file if that record is archived into the second storage type.

Further, in some cases a search key stored in the file names of a plurality of records stored in the first storage type may be combined using a hash function (e.g. using a Bloom filter) into hashed data that is included in the aggregate information in the file name of an archive file, if that plurality of records is archived into an archive file (i.e. into the second storage type).

An example of the different ways in which search keys and aggregate information may be generated according to various embodiments follows. Given a plurality of records with attributes A, B and C, and let A1 denote the value of attribute A in record 1, and Cn the value of attribute C in record n.

One way in which a search key may be generated is, for any given record n, the values of An and Bn may be hashed and stored as a search key in the file name of a zero-length file corresponding to record n. All the values making up that search key are from different attributes of the same record.

One way in which aggregate information may be generated is, when archiving a plurality of records 1 to n, each of the values of attributes C1 to Cn may be hashed, and then combined (e.g. via a binary OR operation) and stored as hashed information in the file name of the file in which the plurality of records is archived. In this way the values making up that hashed information are from the same attributes of different records. Hashed information of this form may be generated using a Bloom filter.

Another way in which aggregate information may be generated is, when archiving a plurality of records 1 to n, hashes (e.g. search keys) of each of (An, Bn) may be combined and stored as hashed information in the file name of the file in which the plurality of records is archived. In this case for each individual record An and Bn may have been hashed and stored as a search key in the file name containing that record in the first storage type, prior to being combined as hashed information in the aggregate information in the archive file name.

In the embodiment of the invention, where the information to be stored for a record exceeds the amount of information that can be stored in one file name, the database service 112 may store the information relating to the record in a plurality of file names, rather than in one file name.

In this embodiment, when storing a record in a file name (e.g. in the first storage type described in the first illustrative embodiment), the database service 112 first determines whether the received information relating to the record (e.g. the alphanumeric character string received in step 304) contains more data than can be stored in the file name of a file of said file system.

If the received information does contain more data than can be stored in the file name of a file, the database service 112 generates a plurality of file names on the basis of the received information relating to the record (e.g. the received message). At least one of the generated file names may include at least part of the received information (e.g. at least part of the alphanumeric information in the message). Typically, each file name may contain information relating to some of the attributes of the record and/or metadata relating to the record.

Once the plurality of filenames have been generated, the database service then stores the record by creating, in a file system, a plurality of files within a directory associated with the given user, each of said files having a different one of the generated file names. Each of these files may for example be created using the same procedure described in the first illustrative example above, e.g. according to step 308.

In this arrangement each generated file name may include an identifier for the record, e.g. a unique key for the record. Each generated file name may also include a different record segment number, in order to indicate the order in which the generated file names should be assembled when the database service 112 reads the record.

This arrangement allows the storage of records in file names, even if the amount of information in the record may exceed the maximum size allowable for a single file name. Records stored in this manner may still be associated with the effect(s) provided by any of the above embodiments.

In alternative to any example one or more attributes of a record that may be changed (e.g. on a frequent basis) may be encoded as metadata in the file name of the file in which they are stored. For example, records may have an attribute indicating whether or not they have been read by a user. These (and other attributes) may be represented as a bit mask encoded as alphanumeric text that is included in the file name within which the record is stored, e.g. in a predefined location within the file name such as characters 4 to 8 of the file name. This means that any subsequent changes to these attributes can be stored in the record by using a single file system write operation to rename the file whose file name contains information relating to the record. Where a number of records are stored within an archive file, all attributes of those records that may be changed may be stored as metadata in the file name of the archive file. This allows changes to the records to be stored by changing the file name of the archive file only, rather than by modifying the archive file contents.

In an alternative example, records stored on behalf of a user in the first and/or second storage type may be stored within files within a hierarchy of directories. This hierarchy of directories may be associated with the user, e.g. the root directory of the hierarchy may be associated with the identified of the user. Sub-directories of the root directory may store records in files according to one of a number of schemes, e.g. where some sub-directories store files containing records of the first storage type and others contain files containing records in the second storage type. Additionally or alternatively records may be partitioned into files in different directories according to the values of one or more of their attributes.

It will be appreciated that the communications event processing system 250 may be used to process communications events that are or that include SMS messages, MMS messages, telephone calls, instant messages, social network posts (e.g. Facebook posts) or microblog entries (e.g. Twitter posts). In this case information relating to such a communications event, which may have been sent or received by a user via a communications network, may be stored as a record on behalf of that user. In order to initiate storage of information relating to such a communications event in the database system 100 the communications event processing system 250 (e.g. the network element 210) may relay the communications event, and in response to relaying the communications event may transmit an alphanumeric character string relating to the communications event (e.g. to the database service 112, for example via the record storage service 200).

It will be appreciated that the first storage type, i.e. where records are each stored in the file names of separate files, described in the first illustrative example, is generally suited to storing alphanumeric information. If a large amount of binary data, e.g. media data, is also to be stored with a record, e.g. in the case of a voicemail message, media messaging message, etc., then rather than storing this binary data in the file name of the file, as in the first illustrative example, the binary data may be more efficiently stored in the file contents of the file. The other attributes of the record may all be stored in the file name of the file, as described in the first illustrative example. This allows the attributes of the record that may be used for searching to be stored and searched efficiently in the file name of the file, while the binary data of the file may be efficiently stored in file contents. In an alternative to this arrangement the binary data could be stored in file contents of a separate file, and the file name containing the other attributes of the record may include an attribute that contains the file name of the file storing binary data, so that that file can be accessed if required.

It will be appreciated that the database system 100 described in any of the above examples may be used with many other applications besides communications event record storage. The database system 100 may provide generic database functionality (such as query processing e.g. using SQL) to clients of the database system 100. The database system 100 could for example be used to store relational database information (e.g. where each table of the database is associated with a directory of the file system that contains a plurality of files each containing records in the first and/or second storage type). Other types of database could be stored using the methods described, as will be appreciated by one skilled in the art.

In an alternative to any example, no record storage service 200 and/or record access service 240 may be provided. In this case the network element 210 and/or client devices 140 - 160 may communicate messages relating to communications events and/or database query information to the database service 112 directly. Each client device 140 - 160 may have a corresponding client program that uses the database system 100 to store, search, and access records of a database, as described above.

It will be appreciated that one or more of the servers and/or services of the above embodiments may be combined and/or removed and/or split across multiple computing platforms. A number of examples follow. The database server 110 and storage server 120 could be the same server. A plurality of storage devices 124 for storing files relating to the database may be connected to or integrated with the storage server 120. The record storage service 200 could be integrated with the network element 210 and/or database server 110. The record access service 240 could be integrated with one or more of the client devices 140 - 160 and/or the database server 110. The functionality provided by the database service 112, operating system 122, record storage service 200, record access service 240 and/or network element 210 may be distributed over a plurality of servers or computing devices.

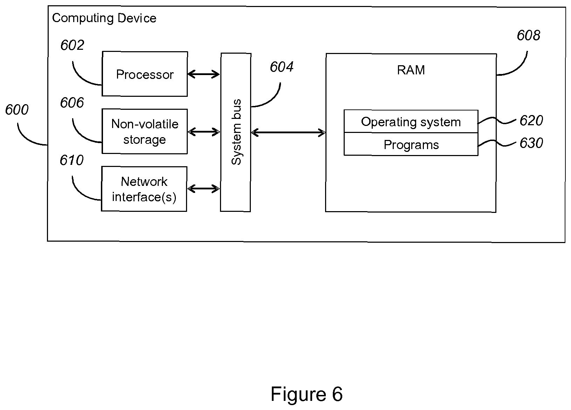

The database server 110, storage server 120, record storage service 200, record access service 240, network element 210 and client devices 140 - 160 may each be a computing device such as a mobile phone, smartphone, a personal digital assistant (PDA), a computer, etc., though in embodiments the database server 110, storage server 120, record storage service 200, record access service 240, network element 210 are or incorporate a computer. Figure 6 schematically illustrates components of a computing device 600 in accordance with embodiments.

The computing device 600 includes a processor 602 and components connected to a system bus 604, where these components may include a non-volatile storage user device 606, random access memory 608, and network interface 610. The computing device may also include a user input interface and a graphics processing component that is connected to a display.

The processor 602 may be configured to execute computer instructions for one or more computer programs including an operating system 620 and other programs 630. For example for the database server 110 these other programs 630 may include the database service 112 described above. For the other devices described above these other programs may include any other programs for providing the respective functionality described above.

The network interface 610 (or plurality of such interfaces) of the computing device 600 allows programs running on the processor 602 of the computing device 600 to transmit and receive data to and from a number of other devices and systems via a communications network (or a plurality of such networks).

The network interface 610 (or the plurality of such interfaces) may include a radio access network interface (or a plurality of such interfaces) that is able to communicate with a wireless access node such as a base station or a wireless access point that provides access to a communications network or a plurality of such networks. The network interface 610 (or plurality of such interfaces) may be able to connect to the wireless access node using one or more of a number of radio access technologies including Global System for Mobile Communications (GSM), Universal Mobile Telecommunications System (UMTS), Long Term Evolution (LTE), fixed wireless access (such as IEEE 802.16 ("WiMax")), and wireless networking (such as IEEE 802.11 ("WiFi")). The communications network and/or wireless access node may also provide access to the Internet. The network interface 610 (or the plurality of such interfaces) may also include a modem and/or an Ethernet card or interface for use with a corresponding communications network, or networks, such as the Internet and/or a private data communications network.

It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the invention, which is defined in the accompanying claims.

## Claims

1. A method for processing communications data for communications transmitted via a communications network, wherein said communications data is processed on behalf of a user of the communications network, wherein communications data for communications is stored as a plurality of records in a database by creating a plurality of files in a file system, wherein each of said plurality of files is stored within said file system and wherein each file has a file name when stored within the file system, the method comprising:
receiving communications data including an alphanumeric character string to be stored as a record in said database on behalf of the user; and
determining whether the received alphanumeric character string contains more data than can be stored in the file name of a file of said file system, and, where said received alphanumeric character string contains more data than can be stored in the file name of a file, the method comprises:
generating a plurality of file names each including data indicative of at least part of said alphanumeric character string and each having a different record segment number indicating an order in which the generated plurality of file names is to be assembled when said stored record is read; and
storing said record by creating, in said file system, a plurality of files within said file system, each of said plurality of files having a different one of said plurality of file names.

2. A method according to claim 1, comprising
executing a database query in order to retrieve communications data relating to one or more communications events, comprising:
receiving database query information;
performing a search of files in said file system on the basis of said database query information, said search returning the file names of one or more files;
retrieving communications data relating to one or more communications events stored as records in said database from said file names of said one or more files; and
transmitting the retrieved information in response to the receipt of the database query information.

3. A method according to claim 1 or 2, wherein each record comprises a plurality of attributes, and wherein generating a file name comprises generating a search key on the basis of at least two attributes of the record, optionally wherein said generating a file name comprises at least one of:
sequentially encoding values indicative of the plurality of attributes of said record in said file name; and
generating a hash on the basis of said at least two attributes of the record.

4. A method according to any preceding claim, comprising archiving a plurality of records of said database, the method comprising:
performing a search of files in said file system in order to retrieve a plurality of file names corresponding to a plurality of records, each of said file names corresponding to one of the records of said database and containing information relating to said record;
generating, on the basis of the retrieved plurality of file names, archive file contents comprising information relating to said plurality of records and an archive file name identifying said plurality of records; and
archiving said plurality of records by creating an archive file having said archive file name and comprising said archive file contents.

5. A method according to any preceding claims wherein each of said plurality of files has an empty file content.

6. A method according to any preceding claim, wherein the communications data relate to one or more of:
a short messaging services, SMS, message;
a multimedia messaging services, MMS, message;
a telephone call record;
an instant message;
a social network post; and
a microblog entry.

7. A method according to any preceding claim, wherein the generated plurality of file names each include an identifier for the record.

8. A method according to claim 7, wherein the identifier for the record comprises a unique key for the record.

9. Apparatus comprising:
at least one processor; and
at least one memory including computer program code;
the at least one memory and the computer program code being configured to, with the at least one processor, cause the apparatus at least to perform the method according to any of claims 1-8.

## Patentansprüche

1. Verfahren zum Verarbeiten von Kommunikationsdaten für Kommunikationen, die über ein Kommunikationsnetzwerk übertragen werden, wobei die Kommunikationsdaten im Namen von einem Nutzer des Kommunikationsnetzwerks verarbeitet werden, wobei Kommunikationsdaten für Kommunikationen als eine Mehrzahl von Datensätzen in einer Datenbank durch Erzeugen einer Mehrzahl von Dateien in einem Dateisystem gespeichert werden, wobei jede der Mehrzahl von Dateien in dem Dateisystem gespeichert ist und wobei jede Datei einen Dateinamen hat, wenn sie in dem Dateisystem gespeichert ist, wobei das Verfahren umfasst:
Empfangen von Kommunikationsdaten, die eine alphanummerische Zeichenkette beinhalten, zum Speichern als ein Datensatz in der Datenbank im Namen des Nutzers;
Bestimmen, ob die empfangene alphanummerische Zeichenkette mehr Daten enthält, als in dem Dateinamen einer Datei in dem Dateisystem gespeichert werden kann, wobei, wenn die empfangene alphanummerische Zeichenkette mehr Daten enthält, als in dem Dateinamen einer Datei gespeichert werden kann, das Verfahren umfasst:
Erzeugen einer Mehrzahl von Dateinamen, von denen jeder zumindest einen Teil der alphanummerischen Zeichenkette beinhaltet und jeder eine andere Datensatzsegmentnummer aufweist, die eine Reihenfolge anzeigt, in der die erzeugte Mehrzahl von Dateinamen zusammenzufügen ist, wenn der gespeicherte Datensatz gelesen wird; und
Speichern des Datensatzes durch Erzeugen, in dem Dateisystem, einer Mehrzahl von Dateien innerhalb des Dateisystems, wobei jede der Mehrzahl von Dateien einen anderen der Mehrzahl von Dateinamen aufweist.

2. Verfahren nach Anspruch 1, umfassend:
Ausführen einer Datenbankabfrage, um Kommunikationsdaten zu erhalten, die sich auf ein oder mehrere Kommunikationsereignisse beziehen, umfassend:
Empfangen von einer Datenbankabfrageinformation;
Durchführen einer Suche nach Dateien in dem Dateisystem auf der Basis der Datenbankabfrageinformation, wobei die Suche die Dateinamen von ein oder mehreren Dateien zurückgibt;
Erhalten von Kommunikationsdaten, die sich auf ein oder mehrere Kommunikationsereignisse, die als Datensätze in der Datenbank gespeichert sind, beziehen, aus den Dateinamen der ein oder mehreren Dateien; und
Übertragen der erhaltenen Information in Antwort auf dem Empfang der Datenbankabfrageinformation.

3. Verfahren nach Anspruch 1 oder 2, wobei jeder Datensatz eine Mehrzahl von Attributen umfasst, und wobei das Erzeugen eines Dateinamens ein Erzeugen eines Suchschlüssels auf der Basis von zumindest zwei Attributen des Datensatzes umfasst, optional, wobei das Erzeugen eines Dateinamens zumindest eines der folgenden Schritte umfasst:
sequenzielles Encodieren von Werten, die indikativ sind für die Mehrzahl von Attributen des Datensatzes, in den Dateinamen; und
Erzeugen eines Hashs auf der Basis der zumindest zwei Attribute des Datensatzes.

4. Verfahren nach einem der vorangegangenen Ansprüche, umfassend ein Archivieren einer Mehrzahl von Datensätzen der Datenbank, wobei das Verfahren umfasst:
Durchführen einer Suche nach Dateien in dem Dateisystem, um eine Mehrzahl von Dateinamen, die zu einer Mehrzahl von Datensätzen korrespondieren, abzurufen, wobei jeder der Dateinamen zu einem der Datensätze der Datenbank korrespondiert und eine Information beinhaltet, die sich auf den Datensatz bezieht;
Erzeugen, auf der Basis der erhaltenen Mehrzahl von Dateinamen, von Archivdateiinhalten, die eine Information umfassen, die sich auf die Mehrzahl von Datensätzen bezieht, sowie einen Archivdateinamen, der die Mehrzahl von Datensätzen identifiziert; und
Archivieren der Mehrzahl von Datensätzen durch Erzeugen einer Archivdatei, die den Archivdateinamen hat und die Archivdateiinhalte umfasst.

5. Verfahren nach einem der vorangegangenen Ansprüche, wobei jede der Mehrzahl von Dateien einen leeren Dateiinhalt hat.

6. Verfahren nach einem der vorangegangenen Ansprüche, wobei die Kommunikationsdaten sich auf eines oder mehrere der folgenden Elemente beziehen:
eine Kurznachrichtendienst-, SMS, -Nachricht;
eine Multimedianachrichtendienst-, MMS, -Nachricht;
einen Telefonanrufdatensatz;
eine instantane Nachricht;
einen Social Network Post; und
einen Mikroblogeintrag.

7. Verfahren nach einem der vorangegangenen Ansprüche, wobei die erzeugte Mehrzahl von Dateinamen jeweils einen Identifizierer für den Datensatz beinhaltet.

8. Verfahren nach Anspruch 7, wobei der Identifizierer für den Datensatz einen eindeutigen Schlüssel für den Datensatz umfasst.

9. Vorrichtung, umfassend:
zumindest einen Prozessor; und
zumindest einen Speicher, der Computerprogrammcode beinhaltet;
wobei der zumindest eine Speicher und der Computerprogrammcode ausgebildet sind, um, mit dem zumindest einen Prozessor, zu bewirken, dass die Vorrichtung zumindest das Verfahren nach einem der Ansprüche 1 bis 8 durchführt.

## Revendications

1. Procédé pour traiter des données de communication pour des communications transmises par l'intermédiaire d'un réseau de communication, dans lequel lesdites données de communication sont traitées au nom d'un utilisateur du réseau de communication, dans lequel les données de communication pour des communications sont mémorisées en tant que pluralité d'enregistrements dans une base de données en créant une pluralité de fichiers dans un système de fichiers, dans lequel chacun de ladite pluralité de fichiers est mémorisé dans ledit système de fichiers et dans lequel chaque fichier a un nom de fichier lorsqu'il est mémorisé dans le système de fichiers, le procédé comprenant :
la réception de données de communication comprenant une chaîne de caractères alphanumériques à mémoriser en tant qu'enregistrement dans ladite base de données au nom de l'utilisateur ; et
la détermination de l'éventualité que la chaîne de caractères alpha-numériques reçue contienne un nombre de données supérieur au nombre de données qui peuvent être mémorisées dans le nom de fichier d'un fichier dudit système de fichiers, et, lorsque ladite chaîne de caractères alphanumériques reçue contient un nombre de données supérieur au nombre de données qui peuvent être mémorisées dans le nom de fichier d'un fichier, le procédé comprend :
la génération d'une pluralité de noms de fichier comprenant chacun des données indicatives d'au moins une partie de ladite chaîne de caractères alphanumériques et ayant chacun un nombre différent de segments d'enregistrement indiquant un ordre dans lequel la pluralité de noms de fichier générés doivent être assemblés lorsque ledit enregistrement mémorisé est lu ; et
la mémorisation dudit enregistrement en créant, dans ledit système de fichiers, une pluralité de fichiers dans ledit système de fichiers, chacun de ladite pluralité de fichiers ayant un nom de fichier différent de ladite pluralité de noms de fichier.

2. Procédé selon la revendication 1, comprenant :
l'exécution d'une interrogation de base de données afin de récupérer des données de communication relatives à un ou plusieurs événements de communication, comprenant :
la réception d'informations d'interrogation de base de données ;
l'exécution d'une recherche de fichiers dans ledit système de fichiers sur la base desdites informations d'interrogation de base de données, ladite recherche renvoyant les noms de fichier d'un ou plusieurs fichiers ;
la récupération de données de communication relatives à un ou plusieurs événements de communication mémorisés en tant qu'enregistrements dans ladite base de données à partir desdits noms de fichier desdits un ou plusieurs fichiers ; et
la transmission des informations récupérées en réponse à la réception des informations d'interrogation de base de données.

3. Procédé selon la revendication 1 ou 2, dans lequel chaque enregistrement comprend une pluralité d'attributs, et dans lequel la génération d'un nom de fichier comprend la génération d'une clé de recherche sur la base d'au moins deux attributs de l'enregistrement, en option dans lequel ladite génération d'un nom de fichier comprend au moins l'un :
du codage séquentiel de valeurs indicatives de la pluralité d'attributs dudit enregistrement dans ledit nom de fichier ; et
de la génération d'un hachage sur la base desdits au moins deux attributs de l'enregistrement.

4. Procédé selon l'une quelconque des revendications précédentes, comprenant l'archivage d'une pluralité d'enregistrements de ladite base de données, le procédé comprenant :
l'exécution d'une recherche de fichiers dans ledit système de fichiers afin de récupérer une pluralité de noms de fichier correspondant à une pluralité d'enregistrements, chacun desdits noms de fichier correspondant à l'un des enregistrements de ladite base de données et contenant des informations relatives audit enregistrement ;
la génération, sur la base de la pluralité récupérée de noms de fichier, de contenus de fichier d'archive comprenant des informations relatives à ladite pluralité d'enregistrements et un nom de fichier d'archive identifiant ladite pluralité d'enregistrements ; et
l'archivage de ladite pluralité d'enregistrements en créant un fichier d'archive ayant ledit nom de fichier d'archive et comprenant lesdits contenus de fichier d'archive.

5. Procédé selon l'une quelconque des revendications précédentes, dans lequel chacun de ladite pluralité de fichiers a un contenu de fichier vide.

6. Procédé selon l'une quelconque des revendications précédentes, dans lequel les données de communication concernent un ou plusieurs :
d'un message de service de messages courts, SMS ;
d'un message de service de messagerie multimédia, MMS ;
d'un enregistrement d'appel téléphonique ;
d'un message instantané ;
d'une publication de réseau social ; et
d'une entrée de microblog.

7. Procédé selon l'une quelconque des revendications précédentes, dans lequel la pluralité générée de noms de fichier comprennent chacun un identifiant pour l'enregistrement.

8. Procédé selon la revendication 7, dans lequel l'identifiant pour l'enregistrement comprend une clé unique pour l'enregistrement.

9. Appareil comprenant :
au moins un processeur ; et
au moins une mémoire comprenant un code de programme d'ordinateur ;
ladite au moins une mémoire et le code de programme d'ordinateur étant configurés pour, avec ledit au moins un processeur, amener l'appareil à au moins effectuer le procédé selon l'une quelconque des revendications 1 à 8.
